# EUROPÄISCHE PATENTSCHRIFT

(11) **EP 2 345 130 B1**
(45) Veröffentlichungstag und Bekanntmachung des Hinweises auf die Patenterteilung: **13.02.2019**
(21) Anmeldenummer: 09760788.1
(22) Anmeldetag: 02.11.2009
(51) Int. Cl.: H02J 3/06, H02M 5/40

(54) **VORRICHTUNG ZUR SPEISUNG EINES ABNEHMERNETZES MIT DER ELEKTRISCHEN LEISTUNG EINES VERSORGUNGSNETZES**
DEVICE FOR FEEDING A CONSUMER NETWORK WITH THE ELECTRIC POWER OF A SUPPLY NETWORK
DISPOSITIF POUR ALIMENTER UN RÉSEAU DE CONSOMMATEURS EN ÉNERGIE ÉLECTRIQUE FOURNIE PAR UN RÉSEAU D'ALIMENTATION

(30) Priorität: 10.11.2008 DE 102008056581
(43) Veröffentlichungstag der Anmeldung: 20.07.2011
(73) Patentinhaber: Siemens Aktiengesellschaft, 80333 München (DE)
(72) Erfinder: KREBS, Uwe, 96114 Hirschaid (DE); MOSER, Jürgen, 91369 Wiesenthau (DE)
(86) Internationale Anmeldenummer: PCT/EP2009/064460
(87) Internationale Veröffentlichungsnummer: WO 2010/052188

(56) Entgegenhaltungen:
- EP-A1- 0 877 475
- EP-A1- 1 803 932
- EP-A2- 0 166 175
- DE-C1- 3 833 719

## Beschreibung

Die Erfindung betrifft ein Verfahren zur Speisung eines Abnehmernetzes mit elektrischer Leistung eines Versorgungsnetzes.

Die Erfindung betrifft ferner eine Vorrichtung zur Speisung eines Abnehmernetzes mit elektrischer Leistung eines Versorgungsnetzes, wobei die Vorrichtung einen Frequenzumrichter aufweist, der einerseits mit dem Versorgungsnetz und andererseits mit dem Abnehmernetz verbindbar ist.

Eine derartige Vorrichtung ist aus der DE 38 33 719 C1 bekannt.

Ein solches Verfahren ist aus der DE 10 2005 004 628 A1 bereits bekannt. Dort ist eine Vorrichtung zur Energieversorgung von im Hafen liegenden Schiffen beschrieben. Im Hafen liegende Schiffe werden in der Regel von laufenden Dieselmotoren mit Energie versorgt. Durch die Abgase der Dieselmotoren kommt es jedoch zu erheblichen Umweltbelastungen in den Hafenstädten. Mit Hilfe der gattungsgemäßen Vorrichtung kann die Energieversorgung von Land aus erfolgen. Auf Grund der in der Regel unterschiedlichen Spannungen, Netzfrequenzen, Sternpunktbehandlungen und dergleichen zwischen dem landseitigen Versorgungsnetz und dem Schiffsverteilungsnetz ist ein statischer Frequenzumrichter vorgesehen, mit dem die unterschiedlichen Netze gekoppelt werden können. Statische Umrichter weisen Leistungshalbleiter auf, mit denen die Umrichtung der Ströme und Spannungen ermöglicht ist. Der vorbekannten Vorrichtung haftet der Nachteil an, dass hohe Kurzschlussströme nicht über eine ausreichend lange Zeitdauer hinweg in das Schiffsverteilungsnetz eingespeist werden können. Die Leistungshalbleiterventile des Frequenzumrichters könnten sonst beschädigt oder gar zerstört werden. Eine ausreichend lange Einspeisung des Kurzschlussstromes ist jedoch zur Lokalisierung eines schiffsseitigen Kurzschlusses notwendig, um im Schiffverteilungsnetz das fehlerhafte Teilnetz vom restlichen Schiffsverteilungsnetz trennen zu können.

Aufgabe der Erfindung ist es daher, ein Verfahren der eingangs genannten Art und eine Vorrichtung bereitzustellen, wobei auch hohe Kurzschlussströme über eine ausreichend lange Zeitdauer hinweg für das Abnehmernetz bereitgestellt werden können, so dass ein Kurzschluss im Abnehmernetz lokalisiert und gezielt von dem restlichen fehlerfreien Abnehmernetz getrennt werden kann.

Die Erfindung löst diese Aufgabe durch ein Verfahren zur Speisung eines Schiffsverteilungsnetz mit der elektrischen Leistung eines landseitigen Versorgungsnetzes, wobei das landseitige Versorgungsnetz über einen Frequenzumrichter und eine zum Überbrücken des Frequenzumrichters eingerichtete mechanische Schalteinheit mit dem Schiffsverteilungsnetz verbunden ist, bei dem das Schiffsverteilungsnetz auf ein Kurzschlusskriterium hin überwacht wird, bei Vorliegen eines Kurzschlusskriteriums die Frequenz des Schiffsverteilungsnetz in die Frequenz des landseitigen Versorgungsnetzes überführt wird, wobei der Frequenzumrichter auch weiterhin einen bei Normalbetrieb ohne Kurzschluss üblichen Nennstrom in das Abnehmernetz einspeist, und anschließend die mechanische Schalteinheit zum Überbrücken des Frequenzumrichters geschlossen wird. Weiter werden wenigstens eine elektrische Eingangsgröße Uₑᵢₙ versorgungsnetzseitig des Frequenzumrichters und wenigstens eine elektrische Ausgangsgröße Uₐᵤₛ abnehmernetzseitig des Frequenzumrichters erfasst und die Phasen der Eingangsgröße Uₑᵢₙ mit der Phase der Ausgangsgröße Uₐᵤₛ verglichen. Die mechanische Schalteinheit wird nach dem Vorliegen des Kurzschlusskriteriums erst bei Feststellen einer Frequenz- und Phasenlagengleichheit zwischen Eingangsgröße Uₑᵢₙ und Ausgangsgröße Uₐᵤₛ geschlossen.

Die Erfindung löst diese Aufgabe ferner durch eine Vorrichtung zur Durchführung des oben beschriebenen Verfahrens mit einer mechanischen Schalteinheit, die parallel zum Frequenzumrichter angeordnet und zum Überbrücken des Frequenzumrichters eingerichtet ist, und durch mit der Schalteinheit verbundene Steuerungsmittel, die bei Nachweis eines über den Frequenzumrichter fließenden Kurschlussstromes zum Betätigen der Schalteinheit eingerichtet sind, wobei die Vorrichtung bei dem oben beschriebenen Verfahren eingesetzt wird.

Erfindungsgemäß ist in Parallelschaltung zum Frequenzumrichter eine mechanische Schalteinheit bereitgestellt, mit der eine Überbrückung des Frequenzumrichters im Kurzschlussfall erfolgen kann. Der Begriff mechanische Schalteinheit umfasst alle Schalter, die voneinander trennbare Kontakte aufweisen. Die Kontakte sind in einer elektrisch isolierenden Umgebung in einer Trennstellung mit Abstand zueinander angeordnet, so dass ein Stromfluss über die Kontakte vermieden ist. Zum Erkennen oder zum Nachweis eines Kurzschlusses im Abnehmernetz sind Steuerungsmittel vorgesehen, die neben dem Erkennen des Kurzschlusses an Hand eines vorgegebenen Kurzschlusskriteriums auch zum Auslösen der mechanischen Schalteinheit eingerichtet sind. Der Kurzschlussstrom fließt nach der Betätigung der Schalteinheit im Wesentlichen über die Schalteinheit, die eine für den Kurzschlussstrom ausreichende Stromtragfähigkeit aufweist. Die mechanische Schalteinheit ist im Rahmen der Erfindung beispielsweise ein Leistungsschalter, ein Lasttrennschalter oder dergleichen. Halbleiterschalter, die auch als elektronische Schalter bezeichnet werden, scheiden erfindungsgemäß aus.

Der Frequenzumrichter ist im Rahmen der Erfindung bevorzugt ein statischer Frequenzumrichter. Statische Umrichter weisen keine sich bewegende Teile oder Komponenten sondern Leistungshalbleiterventile auf. Die Topologie des Frequenzumrichters ist im Rahmen der Erfindung grundsätzlich beliebig. So weist der statische Frequenzumrichter beispielsweise einen Gleichrichter sowie einen Wechselrichter auf, die gleichspannungsseitig miteinander verbunden sind. Gleich- und Wechselrichter im Bereich der Energieübertragung und -verteilung sind dem Fachmann auf diesem Gebiet bestens bekannt, so dass an dieser Stelle auf deren Aufbau nicht detailliert eingegangen zu werden braucht. In der Regel kommen Brückenschaltungen aus so genannten Leistungshalbleiterventilen zum Einsatz, wobei die Leistungshalbleiterventile mit einer Regelung verbunden und von dieser gezielt von einer Sperrstellung, in der ein Stromfluss über das Leistungshalbleiterventil unterbrochen ist, in eine Durchlassstellung überführbar sind, in der Stromfluss über das Leistungshalbleiterventil ermöglicht ist. Die zweckmäßige Ansteuerung der Leistungshalbleiterventile durch die Steuerungseinheit oder besser Regelung ermöglicht die erwünschte Umrichtung. Als Gleichrichter und Wechselrichter, die beide gemeinsam auch als Umrichter bezeichnet werden, kommen beispielsweise zweistufige oder dreistufige Umrichter, aber auch so genannte Multi-Level-Umrichter im Rahmen der Erfindung in Betracht.

Der Frequenzumrichter ist zweckmäßigerweise für Hochspannungen und insbesondere für Spannungen zwischen 1 kV und 52 kV ausgelegt. Im Rahmen der Erfindung sind jedoch auch Frequenzumrichter einsetzbar, die für Spannungen oberhalb von 52 kV oder unterhalb von 1 kV ausgelegt sind.

Zweckmäßigerweise sind die Steuerungsmittel mit dem Frequenzumrichter verbunden und zum Beeinflussen der Frequenzumrichtung des Frequenzumrichters eingerichtet. Gemäß dieser zweckmäßigen Weiterentwicklung wird beispielsweise auch nach dem Auftreten des Kurzschlusses im Schiffsverteilungsnetz dafür gesorgt, dass der Frequenzumrichter das Schiffsverteilungsnetz auch weiterhin nur mit dem üblichen Nennstrom versorgt, der bereits vor dem Kurzschluss eingespeist wurde, dessen Amplitude daher im Wesentlichen unverändert ist. Eine Beschädigung der Leistungshalbleiter und der Frequenzumrichter ist auf diese Weise vermieden. Allerdings kann der Kurzschluss so nicht lokalisiert werden. Daher kommt es zur Betätigung der Schalteinheit. Die Betätigung erfolgt jedoch erst wenn der Frequenzumrichter das Schiffsverteilungsnetz so versorgt, dass unerwünschte Rückkopplungen durch das Einschalten der mechanischen Schalteinheit vermieden sind. Die Steuerungsmittel sind daher entweder Teil der Regelung des Frequenzumrichters oder mit dieser verbunden. Weist beispielsweise das landseitige Versorgungsnetz eine Frequenz von 50Hz, das Schiffsverteilungsnetz hingegen im Normalbetrieb eine Frequenz von 60Hz auf, verhindern die Steuerungsmittel, dass das Schiffsverteilungsnetz direkt mit dem 50Hz-Versorgungsnetz verbunden wird, während der Frequenzumrichter eine 60Hz-Ausgangsspannung Uₐᵤₛ erzeugt. Dies hätte unerwünschte Nachteile im Gefolge.

Gemäß einer bevorzugten Ausgestaltung der erfindungsgemäßen Vorrichtung sind Eingangsmesssensoren vorgesehen, die zum Erfassen von elektrischen Eingangsmessgrößen versorgungsnetzseitig des Frequenzumrichters eingerichtet sind, und Ausgangsmesssensoren, die zum Erfassen von elektrischen Ausgangsmessgrößen abnehmernetzseitig des Frequenzumrichters eingerichtet sind, wobei die Steuerungsmittel mit den Eingangsmesssensoren und den Ausgangsmesssensoren verbunden, und zum Einstellen der Ausgangsfrequenz des Frequenzumrichters auf dessen Eingangsfrequenz eingerichtet sind und das Betätigen der Schalteinheit so lange verzögern, bis eine ausgewählte Ausgangsmessgröße und die entsprechende Eingangsmessgröße die gleiche Frequenz und Phasenlage aufweisen. Gemäß dieser vorteilhaften Ausgestaltung der Erfindung wird berücksichtigt, dass die Spannungen im eingangsseitigen Versorgungsnetz und in dem ausgangsseitigen Schiffsverteilungsnetz unterschiedliche Frequenzen und Phasen aufweisen können. Um unkontrollierte Ausgleichströme beim Überbrücken des Frequenzumrichters zu vermeiden, wird seitens der Steuerungsmittel das Betätigen der Schalteinheit so lange verzögert, bis beidseitig des Frequenzumrichters gleichphasige und gleichfrequente Messgrößen vorliegen. Die Eingangsmessgrößen beziehungsweise Ausgangsmessgrößen sind zweckmäßigerweise die Eingangsspannung und die Ausgangsspannung, also die jeweils vorliegende Spannung im Schiffsverteilungsnetz beziehungsweise die jeweils vorliegende Spannung im landseitigen Versorgungsnetz. Erst wenn im landseitigen Versorgungsnetz sowie im Schiffsverteilungsnetz die Spannungen gleichphasig und gleichfrequent sind, kommt es zur Betätigung und somit zur Überbrückung des Frequenzumrichters durch die Steuerungsmittel.

Zweckmäßigerweise sind Eingangsanschlussmittel zum Verbinden der Vorrichtung mit dem landseitigen Versorgungsnetz und möglicherweise auch Ausgangsanschlussmittel zum Verbinden der Vorrichtung mit dem Schiffsverteilungsnetz vorgesehen. Als Eingangsanschlussmittel beziehungsweise Ausgangsanschlussmittel kommt beispielsweise ein üblicher Transformator in Betracht.

Das Kurzschlusskriterium ist beispielsweise ein einfaches Schwellenkriterium, mit anderen Worten wird der Strom abnehmernetzseitig oder eingangsnetzseitig auf seine Amplitude hin überwacht. Übersteigt die Amplitude des über den Frequenzumrichter fließenden Stromes einen vorgegebenen Schwellenwert über eine vorbestimmte Zeitdauer hinweg, wird auf das Vorliegen eines Kurzschlussstromes geschlossen. Kurzschlussströme übersteigen hinsichtlich ihrer Amplitude diejenigen des üblicherweise vorliegenden Nennstromes um ein Vielfaches. Ein Kurzschlusskriterium wäre beispielsweise dann erfüllt, wenn der gemessene Messstrom einen einstellbaren Schwellenwert, der zweckmäßiger Weise oberhalb des Nennstromes liegt, überschreitet. Bei einem weiteren beispielhaften Kurschlusskriterium gemäß der Erfindung wird neben dem reinen Laststrom, also neben dem vom Frequenzumrichter in das Schiffsverteilungsnetz gespeisten Strom, zusätzlich die Ausgangsspannung überwacht. Der Quotient aus gemessener Spannung und gemessenem Strom stellt eine Impedanz dar. Für diese Impedanz wird gemäß dem beispielhaften erfindungsgemäßen Kurzschlusskriterium ein Impedanzschwellenwert definiert, dessen Unterschreitung als Kurzschlussereignis oder -kriterium gewertet wird.

Gemäß einer zweckmäßigen Ausgestaltung des erfindungsgemäßen Verfahrens werden wenigstens eine elektrische Eingangsgröße versorgungsnetzseitig des Frequenzumrichters und wenigstens eine elektrische Ausgangsgröße abnehmernetzseitig des Frequenzumrichters erfasst und die Phasen und/oder Frequenz jeder Eingangsgröße mit den Phasen der entsprechenden Ausgangsgröße verglichen. Die Schalteinheit wird nach dem Vorliegen des Kurzschlusskriteriums erst bei Feststellung der Phasengleichheit und/oder Frequenzgleichheit zwischen Eingangsgröße und Ausgangsgröße, wie bereits weiter oben ausgeführt wurde, geschlossen.

Zweckmäßigerweise wird nach der Überbrückung des Frequenzumrichters das Verstreichen einer Übertragungszeitdauer und/oder der Wegfall des Kurschlusskriteriums abgewartet, erst anschließend wird die Schalteinheit zur Aufhebung der Überbrückung des Frequenzumrichters betätigt und danach die Frequenz des Abnehmernetzes in die Frequenz vor dem Kurzschluss überführt. Auf diese Weise wird ein einfaches Wiederherstellen der üblichen Betriebsweise der Vorrichtung beispielsweise nach Lokalisieren und Abschalten des Kurzschlusses möglich. Nach dem Aufheben der Überbrückung des Frequenzumrichters wird im Schiffsverteilungsnetz mittels der Regelung des Frequenzumrichters nach und nach wieder der vor dem Kurzschluss herrschende Betriebspunkt angefahren, wobei beispielsweise eine Rampenfunktion zur Anwendung gelangt. Hierbei kann es sich beispielsweise um ein allmähliches Herstellen einer 60 Hz-Frequenz im Abnehmernetz handeln, dessen Frequenz nach der Überbrückung des Frequenzumrichters kurzzeitig der Frequenz des landseitigen Versorgungsnetzes entsprach, beispielsweise 50 Hz. Das Umstellen der Ausgangsfrequenz des Frequenzumrichters nach dem Erkennen des Kurzschlusses erfolgt erfindungsgemäß beispielsweise mit Hilfe einer Sprung- oder Rampenfunktion.

Zweckmäßigerweise überprüfen die Überwachungsmittel, ob im Schiffsverteilungsnetz Energie erzeugt wird, wobei die Überwachungsmittel bei Nachweis einer Energieerzeugung im Schiffsverteilungsnetz das Betätigen der Schalteinheit verhindern. Auf diese Art und Weise wird überprüft, ob das Abnehmernetz ein Inselnetz ist. Inselnetze im Sinn dieser Erfindung zeichnen sich dadurch aus, dass diese über keinen eigenen Energieerzeuger verfügen. Wenn es sich bei dem Schiffsverteilungsnetz um ein Inselnetz handelt, ist somit die gesamte Kurzschlussleistung von dem Frequenzumrichter aufzubringen. Weist das Schiffsverteilungsnetz jedoch einen Energieerzeuger auf, beispielsweise wenn ein Schiffsgenerator des Schiffsverteilungsnetzes noch nicht abgeschaltet ist, kann der Kurzschlussstrom von dem Generator bereitgestellt werden, ohne dass dieser den Frequenzumrichter belastet. In diesem Falle ist eine Überbrückung des Frequenzumrichters unnötig. Gemäß dieser vorteilhaften Ausgestaltung der Erfindung wird demnach festgestellt, ob das Schiffsverteilungsnetz ein Inselnetz ist, und ein Überbrücken des Frequenzumrichters von den Steuerungsmitteln verhindert, wenn dies nicht der Fall ist.

Die Erfindung erstreckt sich neben dreiphasigen Anwendungen ausdrücklich auf Anordnungen mit beliebiger Phasenzahl. Vorteilhafterweise verfügt die mechanische Schalteinheit über Kontakte, die relativ zueinander bewegliche sind. Solche mechanischen Schalter sind im Bereich der Hoch-, Mittel- und Niederspannung bestens bekannt, so dass auf deren genauen Aufbau und Struktur im Rahmen der Erfindung nicht eingegangen zu werden braucht. Sie kommen bevorzugt im Bereich der Elektroenergieübertragung und -verteilung zum Einsatz. Die Kontakte weisen beispielsweise einen ortfest angeordneten Festkontakt auf und einen bezüglich des Festkontaktes beweglich geführten Bewegkontakt. Der Bewegkontakt ist im Rahmen der Erfindung beispielsweise schwenkbar ausgebildet. Abweichend hiervon sind jedoch auch längsbewegliche Bewegkontakte einsetzbar, die beim Schalten eine Hubbewegung durchführen. Die Kontakte solcher Hubschalter sind beispielsweise in einer Vakuumkammer einer Vakuumschaltröhre angeordnet, so dass ein so genannter Vakuumschalter realisiert ist. Abweichend hiervon ist die mechanische Schalteinheit ein Gasschalter, bei dem Blastechniken zum Löschen des Lichtbogens zum Einsatz gelangen.

Vorteilhafterweise weist die mechanische Schalteinheit eine Antriebseinheit zum Erzeugen einer Antriebsbewegung und eine Schaltmechanik zum Einleiten der Antriebsbewegung in die Kontakte auf. Die Antriebeinheit ist beispielsweise ein Federspeicherantrieb oder ein Magnetantrieb.

Zweckmäßigerweise speist auch nach der Betätigung der mechanischen Schalteinheit der Frequenzumrichter den bei Normalbetrieb ohne Kurzschluss üblichen Nennstrom in das Schiffsverteilungsnetz ein.

Gemäß einer bevorzugten Ausgestaltung des erfindungsgemäßen Verfahrens wird nach der Überbrückung des Frequenzumrichters der Wegfall des Kurzschlusskriteriums abgewartet. Bei Wegfall des Kurzschlusskriteriums wird die mechanische Schalteinheit zur Aufhebung der Überbrückung des Frequenzumrichters betätigt und die Frequenz des Schiffsverteilungsnetzes wieder in die bei Normalbetrieb ohne Kurzschluss übliche Frequenz überführt. Dies erfolgt beispielsweise sprunghaft oder bevorzugt mit Hilfe einer Rampenfunktion.

Vorteilhafterweise überprüfen Überwachungsmittel, ob im Abnehmernetz Energie erzeugt wird, wobei die Überwachungsmittel bei Nachweis einer Energieerzeugung im Schiffsverteilungsnetz das Betätigen der Schalteinheit verhindern. Der Kurzschlussstrom kann dann von dem Generator des A Schiffsverteilungsnetzes bereitgestellt werden.

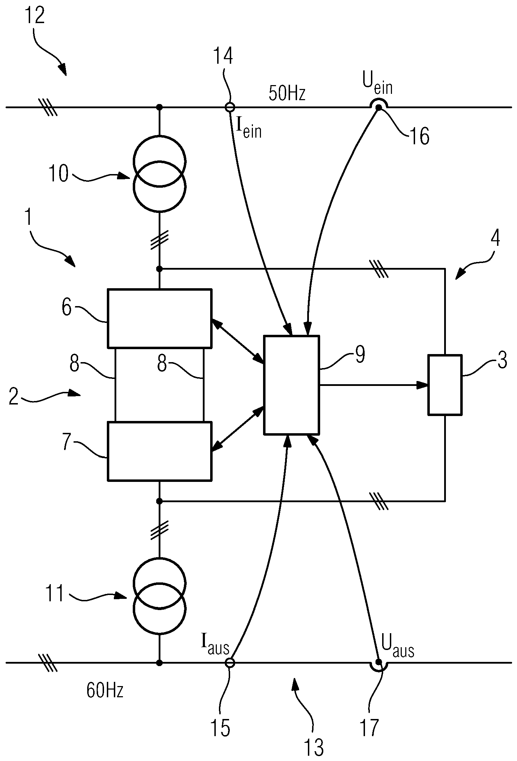

Weitere zweckmäßige Ausgestaltungen und Vorteile der Erfindung sind Gegenstand der nachfolgenden Beschreibung von Ausführungsbeispielen der Erfindung unter Bezug auf die Figur der Zeichnung, wobei die
- Figur: ein Ausführungsbeispiel der erfindungsgemäßen Vorrichtung schematisch verdeutlicht.

Die Figur zeigt ein Ausführungsbeispiel der erfindungsgemäßen Vorrichtung 1 in schematischer Darstellung.

Die Vorrichtung 1 umfasst einen Frequenzumrichter 2 und eine mechanische Schalteinheit 3, die zum Überbrücken des Frequenzumrichters 2 eingerichtet und in einem dreiphasigen Parallelzweig 4 parallel zum Frequenzumrichter 2 angeordnet ist. In der Figur ist aus Gründen der Übersichtlichkeit nur eine Phase dargestellt. Die drei kurzen Querstriche auf der dargestellten Phase sollen jedoch andeuten, dass es sich bei dem dargestellten Ausführungsbeispiel der erfindungsgemäßen Vorrichtung um eine dreiphasige Vorrichtung handelt. Grundsätzlich ist die Anzahl der Phasen der erfindungsgemäßen Vorrichtung jedoch beliebig.

Die mechanische Schalteinheit 3 ist in dem dargestellten Ausführungsbeispiel ein dreipoliger Lasttrennschalter. Jeder Pol des Lasttrennschalters verfügt über eine Vakuumschaltröhre mit zwei einander stirnseitig gegenüberliegenden Kontakten. Einer der Kontakte ist in Längsrichtung beweglich geführt, so dass sie durch Einleiten einer Antriebsbewegung von einer Trennstellung, in der die Kontakte in der Vakuumkammer voreinander getrennt sind, in eine Kontaktstellung, in der die Kontakte aneinander anliegen, überführt werden können. Die Antriebsbewegung wird von einem figürlich nicht gezeigten Magnetantrieb erzeugt und über eine figürlich ebenfalls nicht dargestellte Schaltmechanik in die Kontakte eingeleitet. Der Magnetantrieb ist mit der Steuerungseinheit 9 über eine Signalleitung verbunden.

Der Frequenzumrichter 2 weist einen als Gleichrichter 6 betriebenen Umrichter sowie einen als Wechselrichter 7 betriebenen Umrichter auf, wobei der Gleichrichter 6 und der Wechselrichter 7 über eine Gleichspannungsverbindung 8 miteinander verbunden sind. Zur Regelung und zum Schutz der Umrichter 6, 7 sowie zum Auslösen der mechanischen Schalteinheit 3 dient eine Steuerungseinheit 9, welche die eingangs beschriebenen Steuerungsmittel umfasst.

Die erfindungsgemäße Vorrichtung ist über einen Eingangstransformator 10 als Eingangsanschlussmittel sowie über einen Ausgangstransformator 11 als Ausgangsanschlussmittel mit einem 50Hz-Wechselspannung führenden Versorgungsnetz 12 sowie mit einem 60Hz-Wechselspannung führenden Abnehmernetz 13 verbunden. Bei dem Abnehmernetz 13 handelt es sich in dem in der Figur gezeigten Fall um ein Verteilungsnetz eines größeren Schiffes, das in einem Hafen liegt. Dabei ist das Schiffsverteilungsnetz 13 über den Frequenzumrichter 2 mit dem landseitigen Versorgungsnetz 12 verbunden. Der Frequenzumrichter ist daher notwendig, um die 50Hz-Spannung des Versorgungsnetzes 12 in die 60Hz-Spannung des Schiffsverteilungsnetzes 13 umzuwandeln.

Zur Regelung der Frequenzumwandlung und der Leistungsübertragung sowie der Betätigung der mechanischen Schalteinheit 3 ist die Steuerungseinheit 9 mit versorgungsnetzseitigen Eingangsstromsensoren 14 sowie mit im Schiffsverteilungsnetz 13 angeordneten Ausgangsstrommesssensoren 15 verbunden. Darüber hinaus ist die Steuerungseinheit 9 mit versorgungsnetzseitigen Eingangsspannungsmesssensoren 16 sowie mit im Schiffsverteilungsnetz 13 angeordneten Ausgangsspannungsmesssensoren 17 verbunden. Sind alle Generatoren des Schiffes abgeschaltet, ist das Schiffsverteilungsnetz ein Inselnetz. In diesem Fall muss der Versorgungsstrom allein vom Frequenzumrichter 2 bereitgestellt werden. Um im Kurzschlussfall ein für die Fehlererkennung zu schnelles Abschalten des Frequenzumrichters zu verhindern, überwacht die Steuerungseinheit 9 mit Hilfe der Ausgangsstrommesssensoren 15 die Amplitude der Spannung Uₐᵤₛ im Abnehmernetz 13. Wird von der Steuerungseinheit das Vorliegen eines Kurzschlusskriterium festgestellt, beispielsweise wenn die gemessene Spannung einen zuvor festgelegten und in der Steuerungseinheit 9 implementierten Spannungsschwellenwert unterschreitet oder eine unzulässige Impedanzunterschreitung im Abnehmernetz 13 nachgewiesen wird, sorgt dafür, dass der Frequenzumrichter 2 auch weiterhin nur den Nennstrom in das Abnehmernetz 13 einspeist. Da kein Kurzschlussstrom fließt, kann der Kurzschluss nicht lokalisiert werden. Mit Hilfe einer Sprungfunktion oder mit Hilfe einer Rampenfunktion sorgt die Steuerungseinheit ferner dafür, dass die Ausgangsspannung Uₐᵤₛ des Frequenzumrichters 2 an dessen Eingangsspannung Uₑᵢₙ angepasst wird. Mit anderen Worten wird die 60Hz-Frequenz des Abnehmernetzes 13 des Schiffes in eine 50Hz-Frequenz überführt. Ist eine Frequenzgleichzeit zwischen Ausgangsspannung Uₐᵤₛ und Eingangsspannung Uₑᵢₙ erreicht, wird bei Phasengleichheit dieser Messgrößen Uₑᵢₙ, Uₐᵤₛ der Lasttrennschalter 3 oder mit anderen Worten die mechanische Schalteinheit geschlossen. Ein den Nennstrom übersteigender hoher Kurzschlussstrom kann nun über den Parallelzweig 4 fließen. Vor dem Auslösen der mechanischen Schalteinheit 3 vergleicht jedoch die Steuerungseinheit 9 die versorgungsnetzseitigen Phasen der Spannung Uₑᵢₙ, die mittels der Eingangsspannungsnetzsensoren 16 erfasst werden, mit den abnehmernetzseitigen Spannungen Uₐᵤₛ, die mittels der Ausgangsspannungsmesssensoren 17 erfasst werden.

Nach dem Verstreichen einer Kurzschlusszeitdauer, in der die in der Figur nicht dargestellten Schutzgeräte des Abnehmernetzes 13 des Schiffes den Kurzschluss anhand des Kurzschlussstromes lokalisieren und abschalten, erkennt die Steuerungseinheit 9 über die Auswertung der Signale der angeschlossenen Sensoren 15 und 17 den Wegfall des Kurzschlusskriteriums. Die Steuerungseinheit 9 schaltet die mechanische Schalteinheit 3 aus, überführt deren Kontakte also in deren Trennstellung. Die Leistungsversorgung erfolgt nunmehr wieder ausschließlich über den Frequenzumrichter 2. Die Regelung des Wechselrichters 7 sorgt nach Abschalten der Schalteinheit 3 schließlich für ein allmähliches Wiederherstellen der ursprünglichen 60Hz-Wechselspannung im Abnehmernetz 13 mit Hilfe einer so genannten Rampenfunktion.

## Patentansprüche

1. Verfahren zur Speisung eines Schiffsverteilungsnetz (13) mit der elektrischen Leistung eines landseitigen Versorgungsnetzes (12), wobei das landseitige Versorgungsnetz (12) über einen Frequenzumrichter (2) und eine zum Überbrücken des Frequenzumrichters (2) eingerichtete mechanische Schalteinheit (3) mit dem Schiffsverteilungsnetz (13) verbunden ist, bei dem das Schiffsverteilungsnetz (13) auf ein Kurzschlusskriterium hin überwacht wird, bei Vorliegen eines Kurzschlusskriteriums die Frequenz des Schiffsverteilungsnetzes in die Frequenz des landseitigen Versorgungsnetzes überführt wird, wobei der Frequenzumrichter einen bei Normalbetrieb ohne Kurzschluss üblichen Nennstrom in das Schiffsverteilungsnetz einspeist, und anschließend die mechanische Schalteinheit (3) zum Überbrücken des Frequenzumrichters (2) geschlossen wird, und wobei
- wenigstens eine elektrische Eingangsgröße Uₑᵢₙ versorgungsnetzseitig des Frequenzumrichters (2) und wenigstens eine elektrische Ausgangsgröße Uₐᵤₛ abnehmernetzseitig des Frequenzumrichters (2) erfasst werden,
- die Phasen der Eingangsgröße Uₑᵢₙ mit der Phase der Ausgangsgröße Uₐᵤₛ verglichen werden und
- die mechanische Schalteinheit (3) nach dem Vorliegen des Kurzschlusskriteriums erst bei Festestellen einer Frequenz- und Phasenlagengleichheit zwischen Eingangsgröße Uₑᵢₙ und Ausgangsgröße Uₐᵤₛ geschlossen wird.

2. Verfahren nach Anspruch 1,
**dadurch gekennzeichnet, dass** auch nach der Betätigung der mechanischen Schalteinheit (3) der Frequenzumrichter (2) den bei Normalbetrieb üblichen Nennstrom in das Abnehmernetz einspeist.

3. Verfahren nach einem der vorhergehenden Ansprüche 1 bis 2,
**dadurch gekennzeichnet, dass**
- nach der Überbrückung des Frequenzumrichters (2) der Wegfall des Kurzschlusskriteriums abgewartet wird,
- bei Wegfall des Kurzschlusskriteriums die mechanische Schalteinheit (3) zur Aufhebung der Überbrückung des Frequenzumrichters (2) betätigt und
- die Frequenz des Abnehmernetzes wieder in die bei Normalbetrieb ohne Kurzschluss übliche Frequenz überführt wird.

4. Verfahren nach einem der Ansprüche 1 bis 3,
**dadurch gekennzeichnet, dass** Überwachungsmittel überprüfen, ob im Schiffsverteilungsnetz (13) Energie erzeugt wird, wobei die Überwachungsmittel bei Nachweis einer Energieerzeugung im Schiffsverteilungsnetz (13) das Betätigen der Schalteinheit (3) verhindern.

5. Vorrichtung (1) zur Speisung eines Schiffsverteilungsnetz (13) mit elektrischer Leistung eines landseitigen Versorgungsnetzes (12) zur Durchführung des Verfahrens nach einem der Ansprüche 1 bis 4, wobei die Vorrichtung (1) einen Frequenzumrichter (2) aufweist, der einerseits mit dem landseitigen Versorgungsnetz (12) und andererseits mit dem Schiffsverteilungsnetz (13) verbindbar ist, wobei
eine mechanische Schalteinheit (3), die parallel zum Frequenzumrichter (2) angeordnet und zum Überbrücken des Frequenzumrichters (2) eingerichtet ist, und durch mit der Schalteinheit (3) verbundene Steuerungsmittel (9), die bei Nachweis eines über den Frequenzumrichter (2) fließenden Kurschlussstromes zum Betätigen der Schalteinheit (2) eingerichtet sind.

6. Vorrichtung (1) nach Anspruch 5,
**dadurch gekennzeichnet, dass** die Steuerungsmittel (9) mit dem Frequenzumrichter (2) verbunden und zum Beeinflussen der Frequenzumrichtung des Frequenzumrichters (2) eingerichtet sind.

7. Vorrichtung (1) nach Anspruch 5 oder 6,
**gekennzeichnet durch**
- Eingangsmesssensoren (14,16), die zum Erfassen von elektrischen Eingangsmessgrößen (Iₑᵢₙ,Uₑᵢₙ) versorgungsnetzseitig des Frequenzumrichters (2) eingerichtet sind, und
- Ausgangsmesssensoren (15,17), die zum Erfassen von elektrischen Ausgangsmessgrößen (Iₐᵤₛ,Uₐᵤₛ) abnehmernetzseitig des Frequenzumrichters (2) eingerichtet sind,
- wobei die Steuerungsmittel (9) mit den Eingangsmesssensoren (14,16) und den Ausgangsmesssensoren (15,17) verbunden und zum Einstellen der Ausgangsfrequenz des Frequenzumrichters (2) auf dessen Eingangsfrequenz eingerichtet sind und das Betätigen der mechanischen Schalteinheit (3) so lange verzögern, bis eine ausgewählte Eingansmessgröße (Uₑᵢₙ) und die entsprechende Ausgangsmessgröße (Uₐᵤₛ) die gleiche Frequenz und Phasenlage aufweisen.

8. Vorrichtung (1) nach einem der Ansprüche 5 bis 7,
**gekennzeichnet durch** Eingangsanschlussmittel (10) zum Verbinden der Vorrichtung mit dem landseitigen Versorgungsnetz und/oder Ausgangsanschlussmittel (11) zum Verbinden der Vorrichtung mit dem Schiffsverteilungsnetz.

9. Vorrichtung (1) nach einem der Ansprüche 5 bis 8,
**dadurch gekennzeichnet, dass** der Frequenzumrichter (2) Umrichter (6,7) aufweist, die gleichspannungsseitig miteinander verbunden sind, wobei jeder Umrichter (6,7) über ansteuerbare Leistungshalbleiterventile verfügt.

10. Vorrichtung (1) nach einem der Ansprüche 5 bis 9,
**dadurch gekennzeichnet, dass** die mechanische Schalteinheit (3) Kontakte aufweist, die relativ zueinander beweglich sind.

11. Vorrichtung (1) nach Anspruch 10,
**dadurch gekennzeichnet, dass** die mechanische Schalteinheit eine Antriebseinheit zum Erzeugen einer Antriebsbewegung und eine Schaltmechanik zum Einleiten der Antriebsbewegung in die Kontakte aufweist.

## Claims

1. Method for feeding a marine-vessel distribution network (13) with the electrical power from a land-based power supply system (12), wherein the land-based power supply system (12) is connected to the marine-vessel distribution network (13) via a frequency converter (2) and a mechanical switching unit (3) which is designed to bridge the frequency converter (2), in which the marine-vessel distribution network (13) is monitored for a short-circuit criterion, the frequency of the marine-vessel distribution network is changed to the frequency of the land-based power supply system when a short-circuit criterion is present, with the frequency converter feeding the marine-vessel distribution network with a rated current which is normal during normal operation without a short circuit, and with the mechanical switching unit (3) then being closed in order to bridge the frequency converter (2), and wherein
- at least one electrical input variable Uᵢₙ is detected on the power supply system side of the frequency converter (2), and at least one electrical output variable Uₒᵤₜ is detected on the consumer network side of the frequency converter (2),
- the phases of the input variable Uᵢₙ are compared with the phase of the output variable Uₒᵤₜ, and
- once the short-circuit criterion is satisfied, the mechanical switching unit (3) is closed only when it is found that the input variable Uᵢₙ and the output variable Uₒᵤₜ are at the same frequency and are in phase.

2. Method according to Claim 1,
**characterized in that**
after operation of the mechanical switching unit (3) as well, the frequency converter (2) feeds the consumer network with the rated current which is normal during normal operation.

3. Method according to one of the preceding Claims 1 to 2, **characterized in that**
- after bridging the frequency converter (2), the absence of the short-circuit criterion is waited for,
- in the absence of the short-circuit criterion, the mechanical switching unit (3) is operated in order to cancel the bridging of the frequency converter (2), and
- the frequency of the consumer network is changed back to the normal frequency for normal operation without a short circuit.

4. Method according to one of Claims 1 to 3,
**characterized in that**
monitoring means check whether energy is being produced in the marine-vessel distribution network (13), with the monitoring means preventing the operation of the switching unit (3) if energy production is found in the marine-vessel distribution network (13).

5. Apparatus (1) for feeding a marine-vessel distribution network (13) with electrical power from a land-based power supply system (12) for carrying out the method according to one of Claims 1 to 4, wherein the apparatus (1) has a frequency converter (2) which can be connected on the one hand to the land-based power supply system (12) and on the other hand to the marine-vessel distribution network (13), **characterized by**
a mechanical switching unit (3), which is arranged in parallel with the frequency converter (2) and is designed to bridge the frequency converter (2), and by control means (9), which are connected to the switching unit (3) and are designed to operate the switching unit (2) when it is found that a short-circuit current is flowing via the frequency converter (2).

6. Apparatus (1) according to Claim 5,
**characterized in that**
the control means (9) are connected to the frequency converter (2) and are designed to influence the frequency conversion of the frequency converter (2).

7. Apparatus (1) according to Claim 5 or 6,
**characterized by**
- input measurement sensors (14, 16), which are designed to detect electrical input measurement variables (Iᵢₙ, Uᵢₙ) on the power supply system side of the frequency converter (2), and
- output measurement sensors (15, 17), which are designed to detect electrical output measurement variables (Iₒᵤₜ, Uₒᵤₜ) on the consumer network side of the frequency converter (2),
- wherein the control means (9) are connected to the input measurement sensors (14, 16) and to the output measurement sensors (15, 17), and are designed to set the output frequency of the frequency converter (2) to its input frequency and to delay the operation of the mechanical switching unit (3) until a selected input measurement variable (Uᵢₙ) and the corresponding output measurement variable (Uₒᵤₜ) are at the same frequency and phase angle.

8. Apparatus (1) according to one of Claims 5 to 7,
**characterized by**
input connecting means (10) for connection of the apparatus to the land-based power supply system and/or output connecting means (11) for connection of the apparatus to the marine-vessel distribution network.

9. Apparatus (1) according to one of Claims 5 to 8,
**characterized in that**
the frequency converter (2) has converters (6, 7) which are connected to one another on the DC voltage side, with each converter (6, 7) having controllable power semiconductor valves.

10. Apparatus (1) according to one of Claims 5 to 9,
**characterized in that**
the mechanical switching unit (3) has contacts which can move relative to one another.

11. Apparatus (1) according to Claim 10
**characterized in that**
the mechanical switching unit has a drive unit for producing a drive movement, and a switching mechanism for introducing the drive movement into the contacts.

## Revendications

1. Procédé d'alimentation d'un réseau (13) de distribution de bateau en la puissance électrique d'un réseau (12) d'alimentation du côté de la terre, dans lequel le réseau (12) d'alimentation du côté de la terre est relié au réseau (13) de distribution du bateau par un convertisseur (2) de fréquence et par une unité (3) de commutation mécanique conçue pour shunter le convertisseur (2) de fréquence, dans lequel on contrôle le réseau (13) de distribution du bateau en ce qui concerne un critère de court-circuit, en présence d'un critère de court-circuit, on fait passer la fréquence du réseau de distribution du bateau à la fréquence du réseau d'alimentation du côté de la terre, le convertisseur de fréquence injectant, dans le réseau de distribution du bateau, un courant nominal habituel en fonctionnement normal sans court-circuit et ensuite l'unité (3) d'interruption mécanique étant fermée pour shunter le convertisseur (2) de fréquence et dans lequel
- on détecte au moins une grandeur Uₑᵢₙ électrique d'entrée du côté du réseau d'alimentation du convertisseur (2) de fréquence et au moins une grandeur Uₐᵤₛ électrique de sortie du côté du réseau de consommateur du convertisseur (2) de fréquence,
- on compare les phases de la grandeur Uₑᵢₙ d'entrée à la phase de la grandeur Uₐᵤₛ de sortie et
- on ferme l'unité (3) d'interruption mécanique après la présence du critère de court-circuit, seulement si l'on constate une égalité de fréquence et de position en phase entre grandeur Uₑᵢₙ d'entrée et grandeur Uₐᵤₛ de sortie.

2. Procédé suivant la revendication 1, **caractérisé en ce qu'**également après l'actionnement de l'unité (3) d'interruption mécanique, le convertisseur (2) de fréquence injecte, dans le réseau de consommateur, le courant nominal habituel en fonctionnement normal.

3. Procédé suivant l'une des revendications précédentes 1 à 2, **caractérisé en ce que**
- après le shuntage du convertisseur (2) de fréquence, on attend la disparition du critère de court-circuit,
- à la disparition du critère de court-circuit, on actionne l'unité (3) d'interruption mécanique pour supprimer le shuntage du convertisseur (2) de fréquence et
- on fait passer la fréquence du réseau de consommateur à nouveau à la fréquence habituelle en fonctionnement normal sans court-circuit.

4. Procédé suivant l'une des revendications 1 à 3, **caractérisé en ce que**
des moyens de contrôle contrôlent s'il est produit de l'énergie dans le réseau (13) de distribution du bateau, les moyens de contrôle empêchant l'actionnement de l'unité (3) d'interruption, si l'on détecte une production d'énergie dans le réseau (3) de distribution du bateau.

5. Système (1) d'alimentation d'un réseau (13) de distribution d'un bateau en la puissance électrique d'un réseau (12) d'alimentation du côté de la terre pour effectuer le procédé suivant l'une des revendications 1 à 4, dans lequel le système (1) a un convertisseur (2) de fréquence, qui peut être relié, d'une part au réseau (12) d'alimentation du côté de la terre et d'autre part, au réseau (13) de distribution du bateau, comprenant
une unité (3) d'interruption mécanique, qui est montée en parallèle au convertisseur (2) de fréquence et qui est conçue pour shunter le convertisseur (2) de fréquence, et des moyens (9) de commande, qui sont reliés à l'unité (3) d'interruption et qui sont conçus pour, à la détection d'un courant de court-circuit passant par le convertisseur (2) de fréquence, actionner l'unité (3) d'interruption.

6. Système (1) suivant la revendication 5,
**caractérisé en ce que**
les moyens (9) de commande sont reliés au convertisseur (2) de fréquence et sont conçus pour influencer la conversion de fréquence du convertisseur (2) de fréquence.

7. Système (1) suivant la revendication 5 ou 6,
**caractérisé par**
- des capteurs (14, 16) de mesure d'entrée, qui sont conçus pour détecter des grandeurs (Iₑᵢₙ, Uₑᵢₙ) de mesure électriques d'entrée du côté du réseau d'alimentation du convertisseur (2) de fréquence et
- des capteurs (15, 17) de mesure de sortie, qui sont conçus pour détecter des grandeurs (Iₐᵤₛ, Uₐᵤₛ) de mesure électriques de sortie du côté du réseau de consommateur du convertisseur (2) de fréquence,
- dans lequel les moyens (9) de commande sont reliés aux capteurs (14, 16) de mesure d'entrée et aux capteurs (15, 17) de mesure de sortie et sont conçus pour régler la fréquence de sortie du convertisseur (2) de fréquence à sa fréquence d'entrée et l'actionnement de l'unité (3) d'interruption mécanique est retardé tant qu'une grandeur (Uₑᵢₙ) de mesure d'entrée sélectionnée et la grandeur (Uₐᵤₛ) de mesure de sortie correspondante ont la même fréquence et la même position en phase.

8. Système (1) suivant l'une des revendications 5 à 7, **caractérisé par**
des moyens (10) de raccordement d'entrée pour relier le système au réseau d'alimentation du côté de la terre et/ou des moyens (11) de raccordement de sortie pour relier le système au réseau de distribution du bateau.

9. Système (1) suivant l'une des revendications 5 à 8, **caractérisé en ce que**
le convertisseur (2) de fréquence a des convertisseurs (6, 7), qui sont reliés entre eux du côté de la tension continue, chaque convertisseur (6, 7) disposant de soupapes à semi-conducteur de puissance pouvant être commandées.

10. Système (1) suivant l'une des revendications 5 à 9, **caractérisé en ce que**
l'unité (3) d'interruption mécanique a des contacts, qui sont mobiles l'un par rapport à l'autre.

11. Système (1) suivant la revendication 10,
**caractérisé en ce que**
l'unité d'interruption mécanique a une unité d'entraînement pour produire un mouvement d'entraînement et un mécanisme d'interruption pour appliquer le mouvement d'entraînement aux contacts.
